# EUROPEAN PATENT SPECIFICATION

(11) **EP 4 541 712 B1**
(45) Date of publication and mention of the grant of the patent: **17.06.2026**
(21) Application number: 22755240.3
(22) Date of filing: 17.06.2022
(51) Int. Cl.: B64C 27/26, B64C 27/30, B64U 10/25, B64U 10/20

(54) **LIFT MODULE FOR VERTICAL TAKE-OFF AND LANDING AIRCRAFT AND AIRCRAFT INCORPORATING SUCH A MODULE**
AUFTRIEBSMODUL FÜR EIN SENKRECHT STARTENDES UND LANDENDES FLUGZEUG UND FLUGZEUG MIT EINEM SOLCHEN MODUL
MODULE DE PORTANCE POUR AÉRONEFS DE DÉCOLLAGE ET D'ATTERRISSAGE VERTICAUX ET AÉRONEF COMPRENANT CE MODULE

(43) Date of publication of application: 23.04.2025
(73) Proprietor: 41 Elacopter Aircompany Mad, S.L., 28015 Madrid (ES)
(72) Inventor: PODADERA DOMINGUEZ, Francisco, 37193 CABRERIZOS (Salamanca) (ES)
(74) Representative: Herrero & Asociados, S.L.
(86) International application number: PCT/ES2022/070382
(87) International publication number: WO 2023/242448

(56) References cited:
- WO-A1-2022/099373
- WO-A2-2004/024558
- CN-A- 110 641 694
- US-A- 3 149 800
- US-A1- 2018 362 154

## Description

### Field of the invention

The present invention relates to a lift module, and more specifically to a lift module of the type used to achieve vertical flight in fixed-wing aircraft and which generates low aerodynamic drag during horizontal flight.

### Background to the invention

Vertical take-off and landing aircraft, known as VTOL (vertical take-off and landing) aircraft, can be either exclusively rotary-wing aircraft, which have one or more rotors, or a combination of rotary wing and fixed wing, known as hybrid aircraft, which, once in vertical flight, use the aerodynamic efficiency of the wings for horizontal flight to achieve greater speed and range than rotary-wing aircraft.

The present invention falls within the latter typology, specifically, that which uses rotors, generally electrically driven, to achieve the vertical thrust necessary for take-off and where, once the transition from vertical to horizontal flight has been made due to the use of a horizontal thrust propulsion system, these rotors or part of them are deactivated until the destination point is reached, where they are activated again to achieve the vertical landing at that point.

They are becoming more widely used because they are very efficient and versatile aircraft, but their aerodynamic efficiency is reduced by the drag of the inactive rotors during the horizontal movement of the aircraft.

In principle, three ways have been developed to reduce the aerodynamic drag of inactive rotors during flight, namely, aircraft with rotors with two fixed blades, which are positioned parallel to the flight path, aircraft with rotors with hinged blades, which, once retracted, are positioned parallel to the flight path, and aircraft with rotors whose blades, whether fixed or hinged, are positioned within an enclosed aerodynamic enclosure to avoid contact with the surrounding air stream.

The latter system achieves the best aerodynamic efficiency, as demonstrated in the paper "Impact of lift propeller drag on the performance of eVTOL lift+cruise aircraft" (ELSEVIER Aerospace Science and Technology. Volume 109, February 2021, 106429).

This wind tunnel research shows that for the tested configuration and by retracting the rotors during flight, aerodynamic drag can be reduced by 38%, which could either increase the aircraft's cruise speed by 21% or increase its range by 13%, in the case of maintaining the same cruise speed.

In addition, the following patent documents are known.

Document EP3736212A1, shows the state of the art of aircraft using the first mentioned system, describing an aircraft provided with two propellers positioned in a vertical plane and used exclusively for horizontal displacement, together with eight bi-bladed rotors positioned in horizontal planes and used exclusively for vertical displacement. Once in horizontal flight, the rotor blades are positioned parallel to the flight path to reduce drag, albeit with significant residual drag.

Document US10994829B2, shows the state of the art of aircraft of the second type, describing an aircraft fitted with a rear propeller positioned in a vertical plane, and used exclusively for horizontal displacement, together with eight three-bladed rotors positioned in a horizontal plane and used exclusively for vertical displacement. Once in horizontal flight, the articulated rotor blades of the rotors are folded backwards, parallel to the flight path to reduce drag, while maintaining significant residual drag.

Document EP335989A1 shows a system of the third type, describing an aircraft that has four articulated arms on the lower part of the fuselage, with two-bladed rotors at the ends of the arms. For vertical flight, the arms are deployed and then the rotors are activated by electric motors attached to them. Once in horizontal flight, the rotors are deactivated and their blades are aligned with their respective arms, which in turn retract into the fuselage and are covered by dampers that isolate them from the surrounding current. The disadvantage of this system is the complexity of the mechanism, which increases the cost and weight of the aircraft, as well as reducing the space available inside the fuselage.

Likewise, document EP3771637A1, shows an aircraft with four propulsive propellers located in front of the leading edge of the wing, together with six horizontal rotors for vertical flight, four of which are located behind the trailing edge of the wing and two located in the front part of the fuselage, which are retractable during flight, being housed inside the fuselage and protected from the surrounding current by means of dampers. However, the rest of the rotors still retain significant residual drag, in addition to the complexity of the retraction system for the forward rotors.

WO 2009/149592 A1, shows an aircraft with different propulsion systems and with one or two large folding blade rotors, which are housed in a compartment in the upper part of the fuselage, when the aircraft has made the transition and is in horizontal flight. However, the realisation of these solutions involves significant and costly constructional complexity.

Similarly, US 2019/0337613 A1, shows an aircraft with a propeller positioned on the vertical tail stabiliser and four horizontal rotors positioned above four aerodynamic volumes, in which cavities beneath the rotors house the rotors during horizontal flight once they are inactive and retracted, but this requires a mechanism incorporated into each rotor to allow their insertion and removal from the corresponding cavities.

The constructional disadvantages of the systems described above and the manufacturing costs involved make it necessary to develop a system for the vertical take-off and landing of a hybrid aircraft that is simple, light and easy to manufacture.

In this sense, one of the closest antecedents to the invention is document US 2016/0236774 A1, in which the rotors are positioned inside longitudinal cylindrical receptacles located on both sides of the fuselage, which have lateral openings that allow the rotors to rotate during vertical flight and which, once in horizontal flight, are deactivated and their blades positioned parallel to the receptacles, while movable covers move to close the receptacle openings, although no mechanism is described that allows this closure to be carried out. However, it has the disadvantage that, due to the dimensional limitations conditioned by the openings, this system can only be used for rotors with absolutely rigid blades, since any vertical bending due to the aerodynamic loads they must withstand in vertical flight could cause interference with these openings.

Likewise, document US 10894599 B1 describes an aircraft with four rotors positioned inside longitudinal pylons located on both sides of the fuselage, which have upper covers that, once raised by a lever mechanism, allow the rotors to rotate during vertical flight and which, once in horizontal flight, are deactivated and their blades positioned parallel to the receptacles, so that subsequently, by means of the operation of the levers, the upper covers lower and cover the rotors again. This system has the same disadvantage as the previous one and is only valid for rotors with rigid blades that do not have vertical flexion and interfere with the pylon covers.

Document US3149800 discloses an aircraft having a pair of wings one on each side of central fuselage; a pair of elongated nacelles one on each wing adjacent to the wing tips of said wings with each nacelle having a movable upper portion; and a pair of rotors mounted one on each nacelle with each rotor having a shaft restrained from lateral motion and approximately perpendicular to said wings, each one of said rotors having rotor blades capable of rotary motion about said shafts, said rotors and nacelles being further characterized in having a high speed disposition in which said rotor blades are stationary and adapted to be faired with said nacelles in a low drag disposition with said shafts in an approximately vertical direction passing through said nacelles, and a low speed disposition in which said movable upper portions of said nacelles are moved below said rotor blades and said blades have rotary motion about said shafts.

Document WO2022099373 discloses an aerial vehicle that has a fuselage, at least one wing, propulsion means for forward flight and at least two pairs of arms. Each arm supports at least one rotor powered for vertical take-off and landing (VTOL) and each arm is in a deployed position for vertical take-off or hovering and transitions to a retracted position for forward flight using the at least one wing, and the arms re-transition to a deployed position for vertical landing or hovering.

Document CN110641694 discloses a vertical takeoff and landing fixed-wing unmanned aerial vehicle with rotors capable of being automatically folded. The unmanned aerial vehicle comprises a fuselage, wings and an empennage; a propelling propeller is arranged at the tail part of the fuselage; a front side lifting device assembly is symmetrically arranged on the two sides of the fuselage; rear side lifting device assemblies are arranged on two empennage support rods; the front side lifting device assembly comprises a gear motor, a push rod, a connecting rod, cranks and rocker arms; and each rear side lifting device assembly comprises a second brushless motor and a rear-side lifting propeller.

Document WO2004024558 discloses an apparatus that includes a rotor blade assembly capable of rotation to generate vertical lift, one or more propulsion units capable of engaging and disengaging from the rotor blade assembly, an encapsulating housing, and where the encapsulating housing is capable of containing the rotor blade assembly.

Finally, document US2018362154 discloses an apparatus that comprises a shaft, a rotor, and a cam surface. The shaft comprises a spiral spline along the length of the shaft. The rotor comprises a blade extending from the rotor and a tubular hole extending into the rotor. The tubular hole comprises a spiral groove configured to mate with the spiral spline on the shaft. Relative rotation between the spiral spline and the spiral groove causes the rotor to linearly move along the shaft. The cam surface comprising a recession. The blade nesting in the recession to constrain rotation of the rotor about the shaft and allows linear movement of the rotor along the shaft.

Therefore, all known systems have a number of problems, either associated with their complexity or with their poor reliability and performance, as well as others that limit their use to a limited number of aircraft.

### Description of the invention

The overall intended purpose of the present invention is the aircraft lift module according to the claims, the invention being defined by claims 1 and 6, as well as an aircraft comprising them. Specifically, the invention refers to the development of a modular system for vertical propulsion or lift, with reduced aerodynamic resistance in horizontal flight where, to achieve this, the rotor blades are housed inside pods with lids, which, when opened for vertical flight, uncover the rotors allowing them to turn without interference with the pods even if the blades are curved by the aerodynamic loads.

This invention proposes a modular vertical lift system for fixed-wing aircraft which, either coupled to existing models or integrated into new aircraft designed specifically for the use of such a system, allows them to take off and land vertically thanks to the thrust generated by the rotors.

For a better understanding of this invention, this modular vertical lift system, which integrates at least one rotor, will be called a lift module and whose external surface will preferably be cylindrical, although its cross-section may also vary along its longitudinal axis and in a gradual manner when necessary. In the case of an aircraft configured as a main wing and stabilisers, the forward semi-pod, which is positioned forward of the leading edge of the wing, is the assembly consisting of a lift module and a nose-shaped fairing attached to the front of the wing, and similarly the rear semi-pod, which is positioned aft of the trailing edge of the wing, is the assembly consisting of a lift module and a nose-shaped fairing attached to the rear of the wing. The longitudinal joining of the two is referred to as the pod, which is the geometric volume that achieves reduced aerodynamic drag during horizontal flight.

Additionally, it is proposed that the positioning of the pods be symmetrical with respect to the longitudinal axis of the aircraft, with one or more pods on each side. Another feature proposed for the above configuration is that the rotor or rotors of the front half-pod should be equidistant from the rotor or rotors of the rear half-pod, with respect to the axis that intersects the centre of gravity of the aircraft and is perpendicular to the longitudinal axis of the aircraft.

As in this particular case, for any other possible aircraft configuration, it is also intended to ensure that the positioning of the rotors with respect to the aircraft's centre of gravity is adequate to ensure its stability in the vertical phase of flight.

The lift module, which is the main object of this invention, is composed of a structural compartment and two lids.

The structural compartment is located in the lower part of the lift module and has a high structural strength, with at least one drive assembly consisting of at least one motor, preferably an electric motor, which drives at least one rotor, attached to it. This rotor may have fixed blades or retractable blades.

The lids are located at the top of the lift module and when opened expose the rotor blades which, driven by their corresponding powerplant, generate the vertical thrust required to lift the aircraft. Once airborne, the thrust from the horizontal propulsion engine(s) accelerates the aircraft to its cruising speed, at which point the wings achieve the lift necessary to maintain cruising altitude.

Once this flight regime has been achieved, the rotor drive assemblies are deactivated and the rotor blades are locked or retained in a position parallel to the direction of flight inside the lift module housing the rotors. The lids then enclose the contour of the lift module to achieve a fully enclosed volume and prevent aerodynamic turbulence around the rotor blades, thereby reducing aerodynamic drag.

For landing, the sequence of operations is carried out in reverse, starting with the opening of the lids in flight and ending with their closure once on the ground.

Only in the case of rigid rotors with no possibility of bending, the position of the lift module could be reversed with respect to a horizontal plane, with the structural compartment at the top and the lids at the bottom.

Specifically, to achieve the purpose of the invention, the lids are formed by two curved surfaces symmetrical with respect to the vertical plane passing through the longitudinal axis of the lift module. The structural module has an external surface that is also curved and symmetrical with respect to the vertical plane passing through the longitudinal axis of the lift module, so that its union with the surfaces of the lids results in a preferably cylindrical surface, whose cross sections would be formed by closed curves, preferably ellipses or circles.

Each lid in turn comprises driving means driven by at least one motor, preferably electric, which transmits to the lid such a displacement that, in the open position, allows both lids to be positioned below the plane of rotation of the blades and under the structural compartment without interfering with the rotation of the rotor(s), even if there is flexing of their blades due to aerodynamic loads.

In other words, in the opening position, both lids are located below the plane of rotation of the blades, i.e., substantially located under the structural compartment, i.e., placed almost entirely under the structural compartment, thus freeing up the area above the structural compartment and thus avoiding possible interference with the blades when they are rotating in the horizontal plane. Furthermore, since both Ilids are located below the plane of rotation of the blades, they do not pose a problem, as is the case in the current state of the art, in those cases where the blades flex vertically upwards due to vertical aerodynamic loads or forces of vertical lift.

In this way, the aircraft lift module of the present invention achieves the dual purpose of achieving perfect aerodynamics in the case of horizontal flight. On the one hand, that of achieving perfect aerodynamics in the case of horizontal flight, as the wings or rotary blades are folded in the direction of the aircraft's longitudinal axis and are completely housed inside the structural compartment, which is conveniently closed by the lids: On the other hand, when it is necessary for the aircraft to perform a vertical displacement and, therefore, the rotary blades are in operation, both lids are positioned below the plane of rotation of the blades and, consequently, below the structural compartment in such a way that they do not interfere with the movement of the blades.

More specifically, as mentioned above, when the aircraft is in horizontal flight, i.e. without the intervention of the rotary blades, the rotary blades are housed inside the structural compartment and the latter is suitably closed by the lids, which can, however, be closed in different ways.

Thus, according to various possible practical implementations which will be explained in detail below, the lids are moved by driving means and consist of arches of curved cross-section or, in other words, of surfaces whose cross-section is an arc of curved cross-section, such that, when the structural compartment is closed, the dimensions of the lids are such that their lower edge overlaps the upper edge of the structural compartment, i.e. there is a certain overlap between the lids and the structural compartment to ensure correct aerodynamic behaviour. In this case, in the opening manoeuvre, the driving means are such that the lids make a single downward or, in the closing manoeuvre, an upward movement.

However, in other cases, also described in detail below, it may be desirable for the lower edges of the lids to be flush with the upper edges of the structural compartment when it is closed. In such cases, the driving means vary, since in the opening manoeuvre it is necessary for the lids, or at least their lower edges, to first move outwards from the lift module, either by lateral translation or by turning, so that they can then be moved underneath the structural compartment. Consequently, during the closing manoeuvre, the movements are reversed. In other words, both in opening and closing, the driving means are such that the lids will perform a movement that will be the combination of two movements, one of translation or rotation that helps them to overcome the level of the edge of the compartment and another of displacement that places them under the compartment.

Finally, the invention also relates, as already indicated, to an aircraft comprising the lift module of the invention.

### BRIEF DESCRIPTION OF THE DRAWINGS

In order to supplement the description herein and to assist in a better understanding of the features of the invention, a set of drawings is attached hereto as an integral part of the said description, in which the following is shown for illustrative and nonlimiting purposes:
Figure 1.- Shows a schematic perspective view of a VTOL aircraft with an engine for horizontal flight and rotors for vertical flight which are attached to two pylons symmetrical with respect to the horizontal axis of the aircraft.
Figure 2.- Shows a schematic perspective view of a VTOL aircraft with an architecture similar to that shown in Figure 1, explaining the improvements obtained with the lifting modules covered by the invention and which form part of the pods fixed under the wings of the aircraft.
Figure 3.- Shows the schematic plan views of a VTOL aircraft as an example of the application of the invention, in which can be seen the lifting modules with different number of rotors and whose pods are part of the aircraft structure.
Figure 4.- Shows a perspective view of two closed half-pods, front and rear, which, when joined together, form a complete pod.
Figure 5.- Shows a perspective view of a simplified schematic of a closed lift module, with the rotor in the retained position, as an example of an embodiment of the invention.
Figure 6.- Shows a perspective view of the simplified scheme of an open lift module, with the rotor in the retained position, as an example of an embodiment of the invention.
Figure 7.- Shows a perspective view of the simplified scheme of a lift module, showing: cross section A-A, where the active arms of the lids are positioned, and cross section B-B, where the passive arms of the lids are positioned.
Figure 8.- Shows a simplified cross-sectional view of a lift module in section A-A, in which the closed lids can be seen.
Figure 9.- Shows a simplified cross-sectional view of the lift module in section A-A, in which the open lids can be seen.
Figure 10.- Shows a simplified cross-sectional view of the lift module in section B-B, in which the closed lids can be seen.
Figure 11.- Shows a simplified cross-sectional view of the lift module in section B-B, in which the open lids can be seen.
Figure 12.- Shows a simplified cross-sectional view of a lift module according to another possible embodiment of the invention, shown in section A-A, in which the closed lids can be seen.
Figure 13.- Shows a simplified cross-sectional view of the lift module of figure 12 in section A-A, in which the laterally displaced lids can be seen.
Figure 14.- Shows a simplified cross-sectional view of the lift module of figure 12 in section A-A, in which the open lids can be seen.
Figure 15.- Shows a simplified cross-sectional view of the lift module according to the realisation shown in figure 12 in section B-B, in which the closed lids can be seen.
Figure 16.- Shows a simplified cross-sectional view of the lift module of figure 15 in section B-B, in which the laterally displaced lids can be seen.
Figure 17.- Shows a simplified cross-sectional view of the lift module of figure 15 in section B-B, in which the open lids can be seen.
Figure 18.- Shows a simplified cross-sectional view of a lift module according to another possible embodiment of the invention, shown in section A-A, in which the closed lids can be seen.
Figure 19.- Shows a simplified cross-sectional view of the lift module of figure 18 in section A-A, in which the lids can be seen rotated upwards.
Figure 20.- Shows a simplified cross-sectional view of the lift module of figure 18 in section A-A, in which the open lids can be seen.
Figure 21.- Shows a simplified cross-sectional view of the lift module according to the realisation shown in figure 18 in section B-B, in which the closed lids can be seen.
Figure 22.- Shows a simplified cross-sectional view of the lift module of figure 21 in section B-B, in which the lids can be seen rotated upwards.
Figure 23.- Shows a simplified cross-sectional view of the lift module of figure 21 in section B-B, in which the open lids can be seen.
Figure 24.- Shows a perspective view of the simplified scheme of a closed lift module, with the rotor in a retained position according to another possible realisation, in which the motors and bearings or bushings located on the axis of the lift module can be seen, but in different transversal planes.
Figure 25.- Shows a simplified cross-sectional view of the lift module of the present invention made in the section where a motor-rotor assembly is located, with the rotor in the retained position, in which the closed lids can be seen.

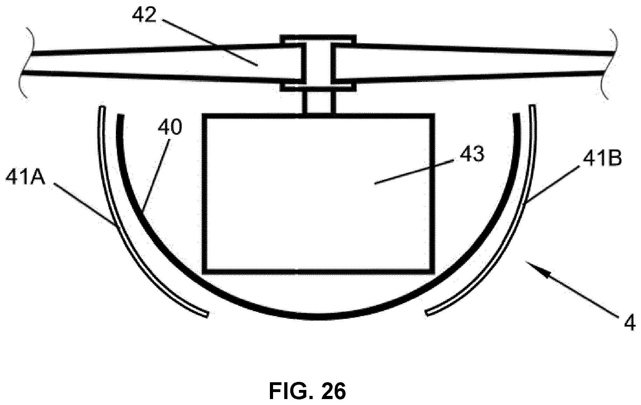

Figure 26.- Shows a simplified cross-sectional view of the lift module of the present invention made in the section where a motor-rotor assembly is located, with the rotor in the unfolded position, in which the open lids can be seen.

### PREFERRED EMBODIMENT OF THE INVENTION

In the figures provided, identical or similar components are marked with the same reference numbers. The axes of positioning in space refer, if not otherwise indicated, to the axes of the aircraft, i.e. longitudinal axis X, transverse axis Y and vertical axis Z, all orthogonal.

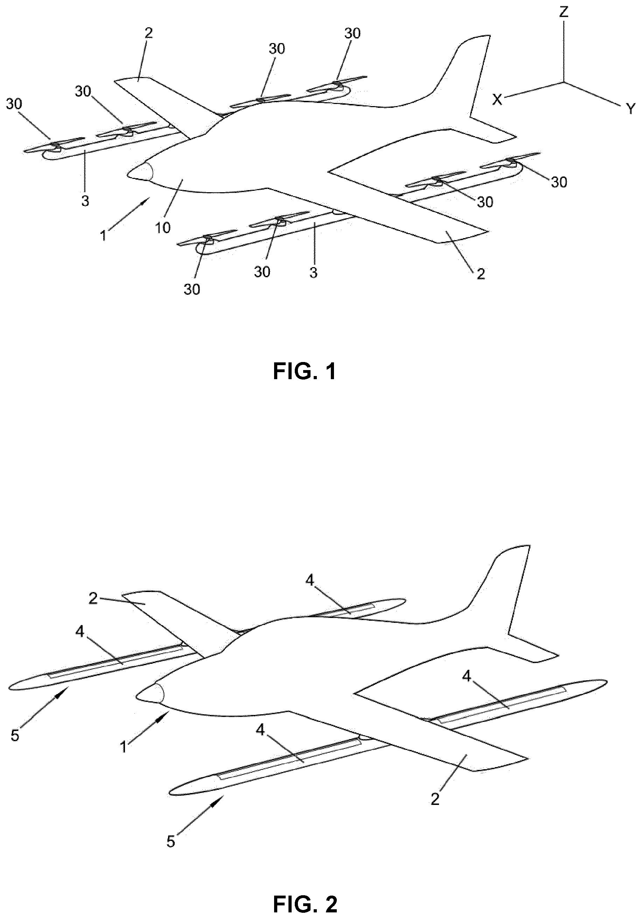

Figure 1 shows a perspective view of an aircraft 1 for vertical take-off and landing whose lift is produced by both the fixed wings 2 and the rotors 30.

In cruise flight, the aircraft 1 uses a propeller and an engine installed in its fuselage 10 to achieve forward flight along the X axis while lift along the Z axis is provided by the wings 2. To achieve vertical flight, it uses rotors 30 which are attached to two pylons 3 symmetrical with respect to the X longitudinal axis of the aircraft 1 and positioned under the wings 2.

The rotors continue to be exposed to the airstream after take-off and during cruise flight, and although their blades are positioned parallel to the aircraft's longitudinal X axis, the increase in aerodynamic drag is significant as described above in the background of the invention.

Figure 2 shows an aircraft 1 with an architecture similar to that of Figure 1 in the horizontal flight phase, showing two pods 5 attached to the wings 2 and of which the lifting modules 4 according to the proposed invention are part.

It follows from this arrangement that, as the rotor blades are not exposed to the surrounding airflow, the aerodynamic drag generated by the rotors is zero with respect to the composition shown in Figure 1, as described above in the background to the invention.

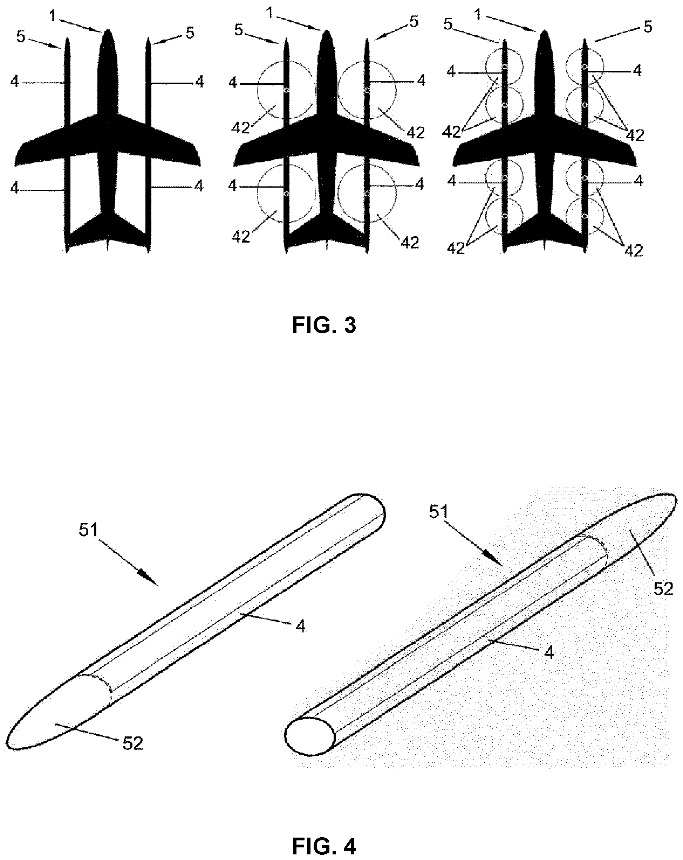

As an example of application of the invention by way of illustration and not limitation, Figure 3 shows plan views of a VTOL 1 aircraft with two pods 5 located symmetrically with respect to the longitudinal axis X of the aircraft, in which it can be seen that a lift module 4 has the possibility of accommodating different number of rotors 42, depending on the characteristics required of the aircraft, such as maximum weight, power available for the electric motors, safety level required in case of failure of one or more motors, etc.

A possible preferred embodiment for providing the lift modules 4 with reduced aerodynamic drag in the horizontal flight situation is shown in Figure 4 by joining two substantially cylindrical half-pods 51, the front half-pod consisting of a nose-shaped fairing 52 attached to the front of one lift module 4 and the rear half-pod consisting of another lift module 4 to the rear of which a nose-shaped fairing 52 is attached. These half-pods are joined one after the other to form a complete pod 5 as shown in previous figures.

Thus, in particular, each of the lift modules 4 comprises:
- a structural compartment 40 in which is fixed at least one drive assembly 43 driving a rotor 42 and its corresponding blades, which, when rotating, define a plane of rotation;
- two lids 41A and 41B movable between an opening and closing position of the structural compartment 40; and driving means for operating said lids 41A and 41B.

Wherein the driving means are such that in the open position both lids 41A and 41B are located below the plane of rotation of the blades so as not to interfere with the rotation of the rotor and, according to the embodiment shown in the figures, at least partially below the structural compartment 40.

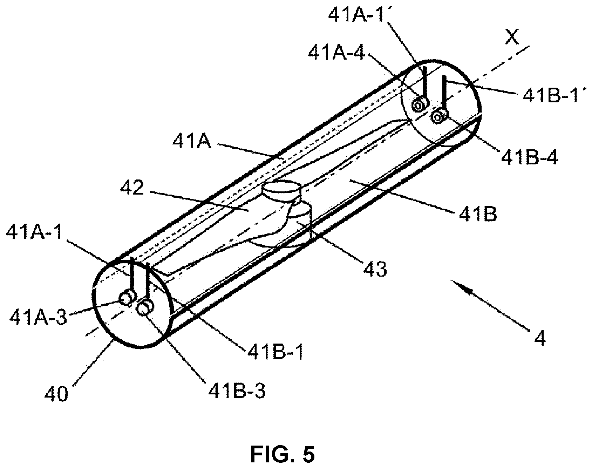

A possible practical embodiment of the invention is shown in Figure 5, in which a lift module 4 can be seen aligned with the aforementioned longitudinal axis X, with its lids 41A and 41B closed and the structural compartment 40, in which is fixed a drive assembly 43 driving a rotor 42 located above the structural compartment 40 and whose blades are aligned with the longitudinal axis X of the lift module 4.

According to this embodiment, the driving means of the lids 41A and 41B consist of at least two arms, one for each lid. More specifically, at one of its ends, the lid 41A is fixed to the upper end of an arm 41A-1, known as the active arm, the lower end of which has a shaft fixed to it which is in solidarity with the shaft of a motor 41A-3 which rotates the lid 41A in a controlled manner.

However, according to the possible embodiment shown in the figures, the driving means of the lids 41A and 41B may additionally comprise other arms in order to avoid or reduce as much as possible the vibrations due to the currents occurring between the said lids and the structural compartment 40. More specifically, the lid 41A is attached, at the end opposite to that at which it is attached to the active arm 41A-1, to the upper end of another equal arm 41A-1', called the passive arm, the lower end of which has a solidary shaft which rotates freely in a bearing or bushing 41A-4. And in a symmetrical arrangement with respect to the vertical plane intersecting the longitudinal axis X, the lid 41B is attached to the upper end of an active arm 41B-1, the lower end of which has a shaft attached to it which is in solidarity with the shaft of a motor 41B-3 which rotates the lid 41B in a controlled manner. At the other end, symmetrically, the lid 41B is attached to the upper end of another, passive arm 41B-1', the lower end of which has a solidary shaft which rotates freely in a bearing or bushing 41B-4.

However, it could even be the case that the two arms per lid are active, in which case the motors driving them should be coordinated to distribute the efforts, or even that there are more than two arms per lid, combining active and passive arms in a similar way as described above.

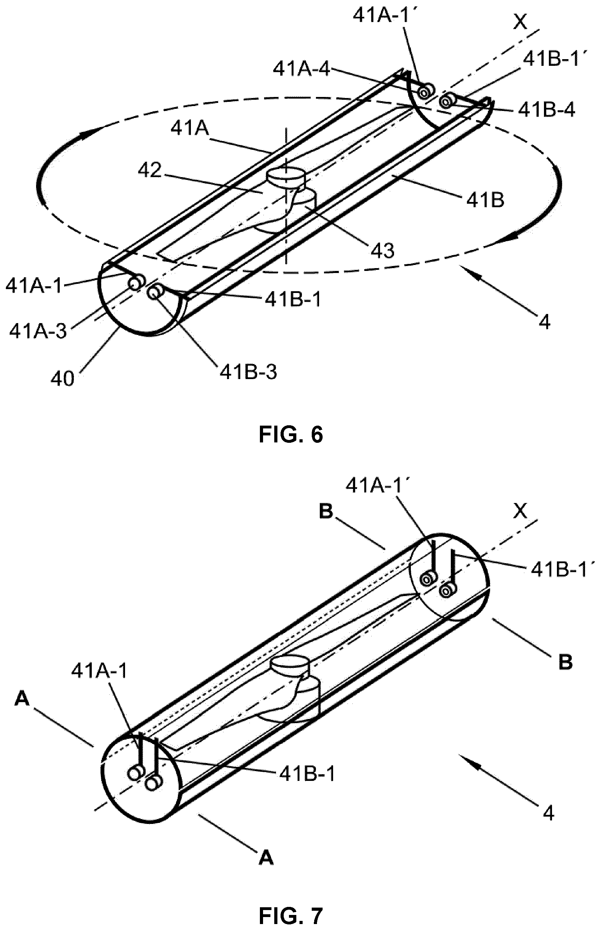

On the other hand, Figure 6 shows the lift module 4 with the lids 41A and 41B when they are in their open position, showing how both are located below the plane of rotation of the blades and almost entirely below the structural compartment 40, also showing the possibility of freedom of rotation of the rotor blades 42 without any type of interference.

Figure 7 shows the lift module 4 with section A-A where the active arms 41A-1 and 41B-1 are located and section B-B where the passive arms 41A-1' and 41B-1' are located, geometrically the same as the active arms.

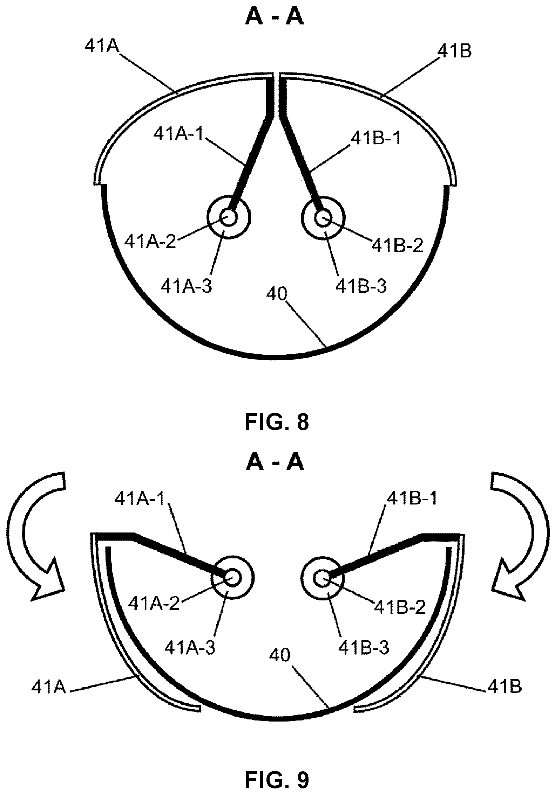

A preferred embodiment of the lid drive system for this invention can be seen in Figure 8 which shows the simplified schematic of the cross section A-A of the lift module, where the active arms 41A-1 and 41B-1 are located, whose axes of rotation are solidary with the shafts 41A-2 and 41B-2 of the motors 41A-3 and 41B-3 respectively, which are fixed to the structural compartment 40 and located on both sides and equidistant from the longitudinal axis X of the lift module and preferably in the same transverse plane, in which the curved arcs forming the sections of the lids 41A and 41B can be seen in closed position, with their lower edges overlapping on the outside with the upper edges of the structural compartment 40, whose cross section is formed by another curved arc.

A simplified schematic of the cross section A-A of the lift module, where the same components described in Figure 8 are located, is shown in Figure 9, in which can be seen the rotation of the active arms 41A-1 and 41B-1, which entail the corresponding downward displacements of the lids sections 41A and 41B, until reaching the fully open position, where both are, as already mentioned, located below the plane of rotation of the blades and almost entirely under the structural compartment 40 so as not to interfere with the rotation of the rotor.

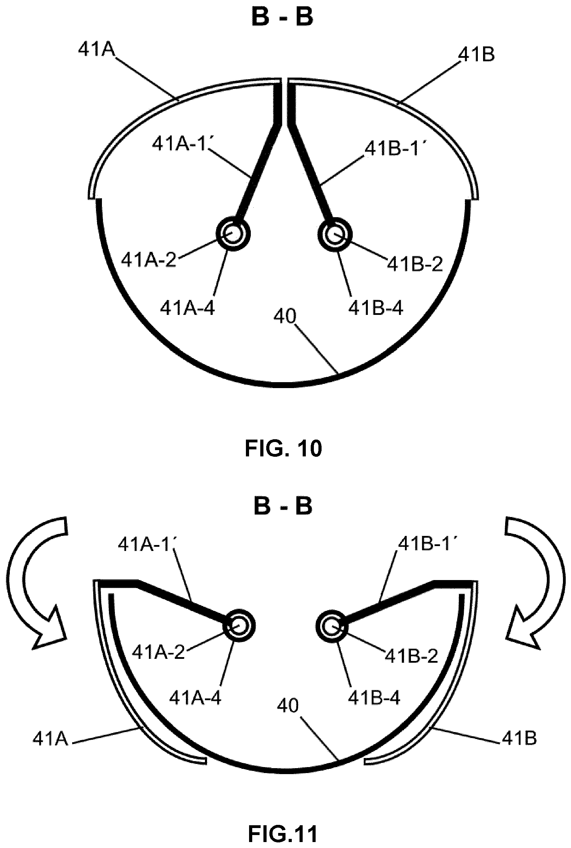

A simplified scheme of the cross section B-B of the lift module is shown in Figure 10, where the passive arms 41A-1' and 41B-1' can be seen, whose axes of rotation are solidary with the shafts 41A-2 and 41B-2 of the bearings or bushings 41A-4 and 41B-4 respectively, which are attached to the structural compartment 40 and located in the same position relative to the longitudinal axis X of the lift module as the motors 41A-3 and 41B-3, where the arcs of curves forming the sections of the lids 41A and 41B can be seen in a closed position, with their lower edges overlapping the upper edges of the structural compartment 40.

A simplified schematic of the cross section B-B of the lift module, where the same components described in Figure 10 are located, is shown in Figure 11, in which can be seen the rotations of the passive arms 41A-1' and 41B-1', which entail, as already mentioned, the corresponding downward displacements of the lid sections 41A and 41B, until reaching the fully open position, where both are, as already mentioned, located below the plane of rotation of the blades and practically entirely under the structural compartment 40 so as not to interfere with the rotation of the rotor.

Thus, as also explained above, the lids 41A and 41B are dimensioned such that when the structural compartment 40 is closed, their lower edges are overlapped on the outside by the upper edges of the structural compartment 40, i.e. there is some overlap between the lids and the structural compartment to ensure proper aerodynamic performance.

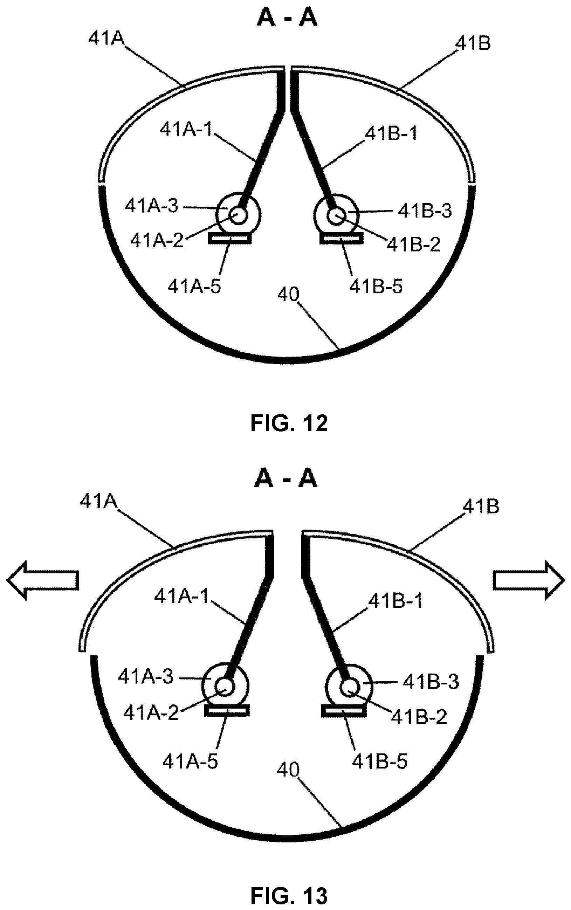

However, another possible embodiment of the lid drive system for this invention is the case where the surfaces of the lids 41A and 41B are flush with the surface of the structural compartment 40, as can be seen in Figure 12, which shows the simplified scheme of the cross section A-A of the lift module, where the active arms 41A-1 and 41B-1 are located, whose axes of rotation are solidary with the shafts 41A-2 and 41B-2 of the motors 41A-3 and 41B-3 respectively, which are located on both sides and equidistant from the longitudinal axis X of the lift module and preferably in the same transverse plane in which can be seen the curved arcs forming the sections of the lids 41A and 41B in closed position, with their lower edges flush with the upper edges of the structural compartment 40, whose cross-section is formed by another curved arc. The motors 41A-3 and 41B-3 slide on transverse guides 41A-5 and 41B-5 fixed to the structural compartment 40, when they are pushed linearly by electric, hydraulic or pneumatic actuators acting on rack and pinion, worm gear, slide, piston or any other type of mechanism commonly used to perform this type of function.

A simplified schematic of the cross-section A-A of the lift module, where the same components described in Figure 12 are located, is shown in Figure 13 where the lateral displacements of the active arms 41A-1 and 41B-1 and consequently of the sections of the lids 41A and 41B can be seen so that they are no longer flush with the upper edges of the structural compartment 40, but separated from them.

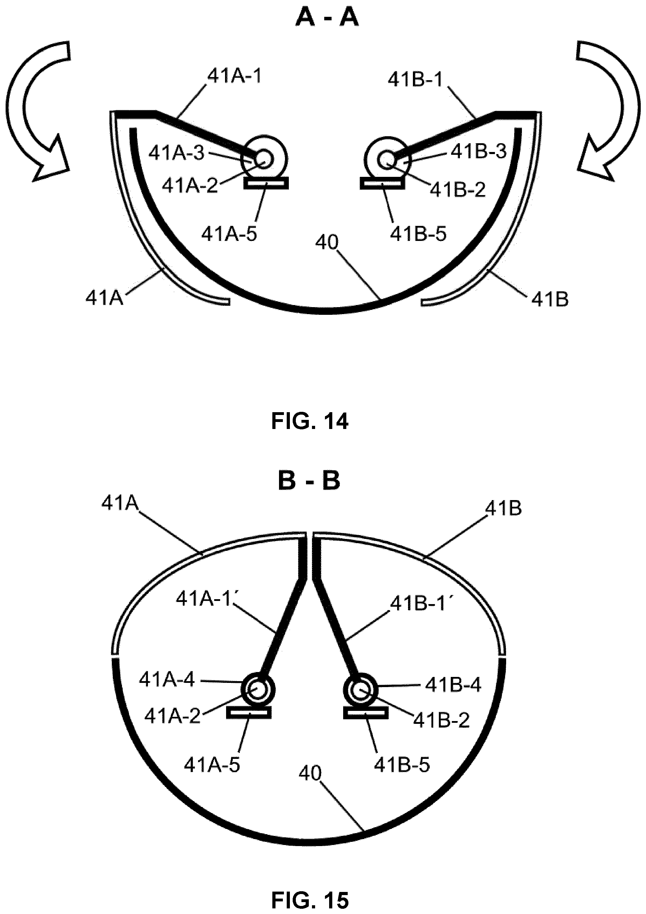

A simplified schematic of the cross section A-A of the lift module, where the same components described in Figure 12 are located, is shown in Figure 14, in which it is possible to appreciate the rotation of the active arms 41A-1 and 41B-1, which entail, as already mentioned, the corresponding downward displacements of the sections of the lids 41A and 41B, until reaching the fully open position, where both are, as already mentioned, located below the plane of rotation of the blades and practically entirely under the structural compartment 40 so as not to interfere with the rotation of the rotor.

A simplified schematic of the cross section B-B of the lift module can be seen in Figure 15, where the passive arms 41A-1' and 41B-1' whose axes of rotation are solidary with the shafts 41A-2 and 41B-2 of the bearings or bushings 41A-4 and 41B-4 respectively and located in the same relative position with respect to the longitudinal axis X of the lift module, as motors 41A-3 and 41B-3 in which the arcs of curves forming the sections of lids 41A and 41B can be seen in the closed position, with their lower edges flush with the upper edges of the structural compartment 40. The bearings or bushings 41A-4 and 41B-4 slide on transverse guides 41A-5 and 41B-5 fixed to the structural compartment 40, when they are pushed linearly by hydraulic or pneumatic electric actuators acting on rack and pinion, worm gear, slide, o-piston or any other type of mechanism that is common for this type of function.

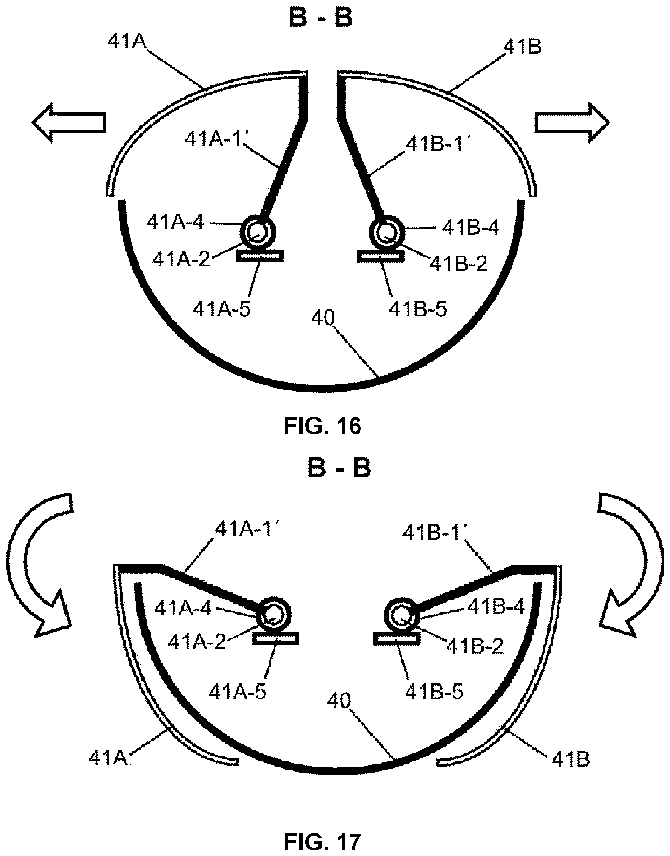

A simplified schematic of the cross-section B-B of the lift module, where the same components described in Figure 15 are located, is shown in Figure 16 in which the lateral displacements of the passive arms 41A-1' and 41B-1' and consequently of the sections of the lids 41A and 41B can be seen so that they are no longer flush with the upper edges of the structural compartment 40, but separated from them.

A simplified schematic of the cross section B-B of the lift module, where the same components described in Figure 15 are located, is shown in Figure 17, in which can be seen the rotations of the passive arms 41A-1' and 41B-1' which entail, as already mentioned, the corresponding downward displacements of the lid sections 41A and 41B, until reaching the fully open position, where both are, as already mentioned, located below the plane of rotation of the blades and practically entirely under the structural compartment 40 so as not to interfere with the rotation of the rotor.

Thus, as also explained above, the lids 41A and 41B are dimensioned such that when the structural compartment 40 is closed, their lower edges are flush with the same level as the upper edges of the structural compartment 40. In such cases, the driving means, i.e., the active arms 41A-1 and 41B-1 and passive arms 41A-1' and 41B-1', first move laterally outwards from the lift module, so that they can then be moved downwards to position them below the plane of rotation of the blades, under the structural compartment. Consequently, during the closing manoeuvre, the movements are reversed.

That is, in both opening and closing, the driving means are such that the lids will perform a movement that is a combination of two movements, one of translation or lateral displacement that helps them to overcome the level of the upper edge of the structural compartment 40 and another of downward displacement that places them below the plane of rotation of the blades and at least partially under said structural compartment 40.

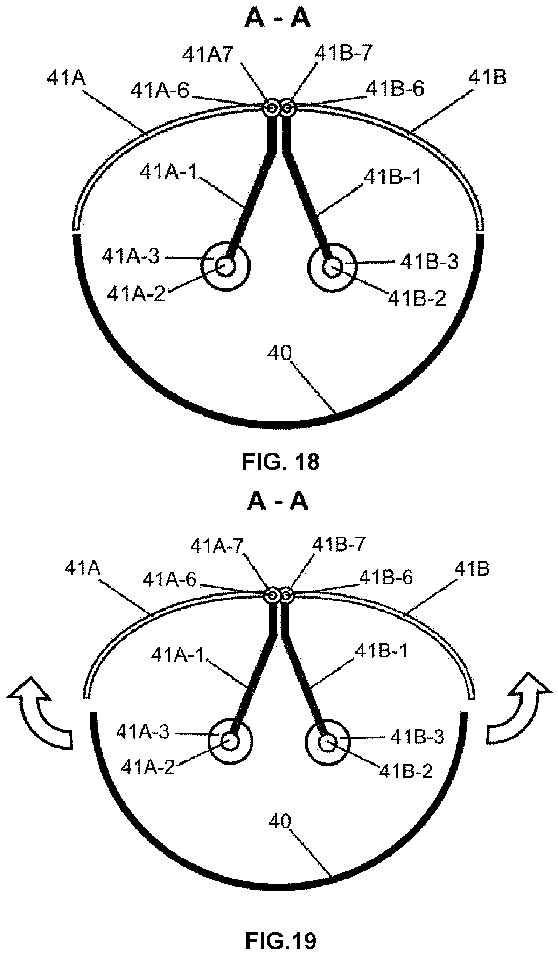

Finally, another preferred embodiment of the lid drive system for this invention, in the case where the surfaces of the lids 41A and 41B are flush with the surface of the structural compartment 40, can be seen in Figure 18 which shows the simplified schematic of the cross section A-A of the lift module, where the active arms 41A-1 and 41B-1 are located, the lower ends of which have axes of rotation in solidarity with the shafts 41A-2 and 41B-2 of the motors 41A-3 and 41B-3 respectively, which are located on both sides and equidistant from the longitudinal axis X of the lift module and located in different transverse planes, in which can be seen the curved arcs forming the sections of the lids 41A and 41B in closed position, with their lower edges flush with the upper edges of the structural compartment 40, the cross section of which is formed by another curved arch. The lids 41A and 41B are articulated with the upper ends of the active arms 41A-1 and 41B-1 respectively, by means of motors 41A-7 and 41B-7 fixed to said arms and located in different transversal planes and whose axes 41A-6 and 41B-6 are solidary with their corresponding lids. Specifically, according to the example embodiment, in order to move the lids 41A and 41B, the motors 41A-7 and 41B-7 are first actuated simultaneously and in a controlled manner, whereby the lids are rotated upwards and disengaged, and subsequently rotated downwards in a controlled manner by the motors 41A-3 and 41B-3 and positioned below the plane of rotation of the blades and at least partially under the structural compartment 40.

A simplified schematic of the cross-section A-A of the lift module, where the same components described in Figure 18 are located, is shown in Figure 19 in which the active arms 41A-1 and 41B-1 and consequently the lid sections 41A and 41B are turned upwards so that they are no longer flush with the upper edges of the structural compartment 40, but are separated from them.

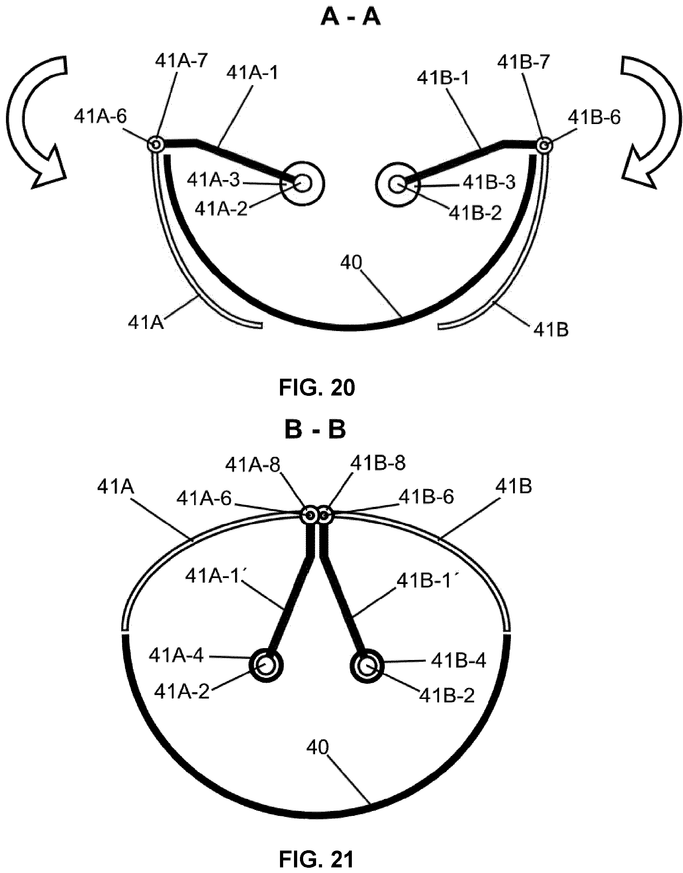

A simplified schematic of the cross section A-A of the lift module, where the same components described in Figure 18 are located, is shown in Figure 20, in which the downward rotations of the active arms 41A-1 and 41B-1 can be seen, the corresponding downward displacements of the lid sections 41A and 41B, until reaching the fully open position, where both are, as already mentioned, located below the plane of rotation of the blades and practically entirely under the structural compartment 40 so as not to interfere with the rotation of the rotor.

A simplified schematic of the cross section B-B of the lift module can be seen in Figure 21, which shows the passive arms 41A-1' and 41B-1', the lower ends of which have axes of rotation which are in line with the shafts 41A-2 and 41B-2 of the bearings or bushings 41A-4 and 41B-4 respectively and are located in the same relative position with respect to the longitudinal axis X of the lift module, as motors 41A-3 and 41B-3, in which the arcs of curves forming the sections of lids 41A and 41B can be seen in the closed position, with their lower edges flush with the upper edges of the structural compartment 40. The lids 41A and 41B are articulated with the upper ends of the passive arms 41-A1' and 41B-1' respectively, by means of bearings or bushings 41A-8 and 41B-8 fixed to said arms and located in different transversal planes and whose axes 41A-6 and 41B-6 are solidary with their corresponding lids as can be seen in Figure 21. Specifically, when the lids 41A and 41B are rotated by means of the system located in section A-A, their ends in section B-B are dragged and rotated in parallel thanks to the supports of the passive arms 41-A1' and 41-B1' on the bearings or bushings located at the ends of said arms.

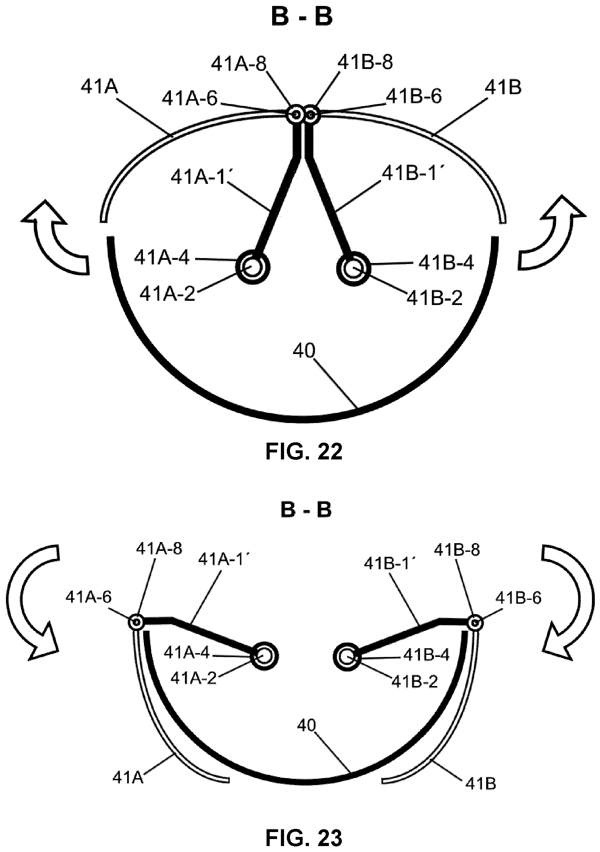

A simplified schematic of the cross-section B-B of the lift module, where the same components described in Figure 21 are located, is shown in Figure 22 where the passive arms 41A-1' and 41B-1' and consequently the lid sections 41A and 41B are turned upwards so that they are no longer flush with the upper edges of the structural compartment 40, but separated from them.

A simplified schematic of the cross section B-B of the lift module, where the same components described in Figure 21 are located, is shown in Figure 23, in which the downward rotations of the passive arms 41A-1' and 41B-1' can be seen, which entail, as already mentioned, the corresponding downward displacements of the lid sections 41A and 41B, until reaching the fully open position, where both are, as already mentioned, located below the plane of rotation of the blades and practically entirely under the structural compartment 40 so as not to interfere with the rotation of the rotor.

Thus, as in the previous cases, the lids 41A and 41B have dimensions such that when the structural compartment 40 is closed, their lower edges are flush with the same level as the upper edges of the structural compartment 40. In such cases, the driving means, i.e. the active arms 41A-1 and 41B-1 and passive arms 41A-1' and 41B-1', first rotate upwards, so that they can then be moved downwards to bring them below the plane of rotation of the blades and almost entirely under the structural compartment 40. Consequently, during the closing manoeuvre, the movements are reversed.

That is, in both opening and closing, the driving means are such that the lids will perform a movement that is a combination of two movements, one upwardly rotating to help them rise above the level of the upper edge of the structural compartment 40 and the other downwardly moving to place them below it.

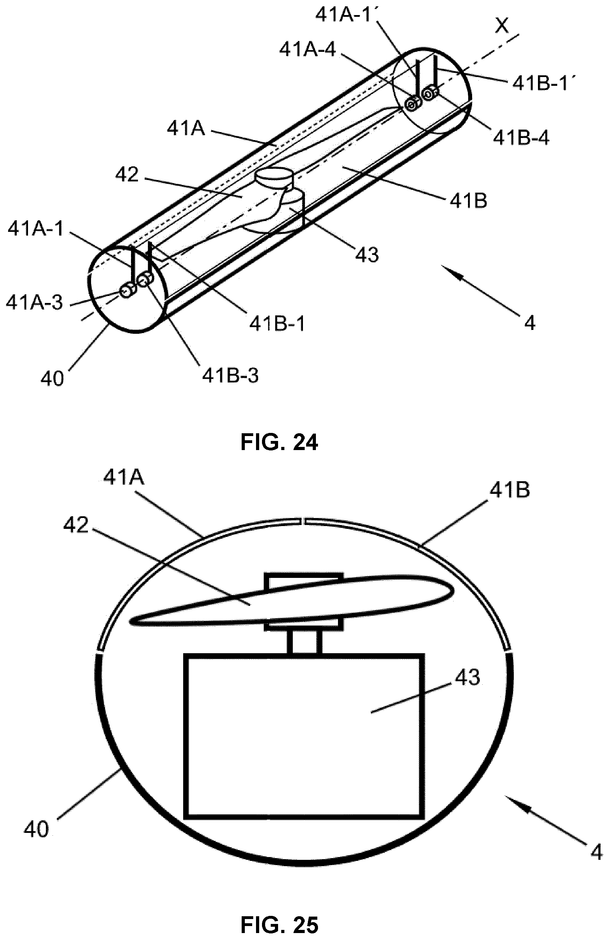

Finally, it should be noted that in all the above embodiments, if the distance between motors 41A-3 and 41B-3 and the longitudinal axis X of the lift module is very small or even zero, these motors should be located in different transverse planes so as not to interfere with each other and, similarly, bearings 41A-4 and 41B-4 should be located in different transverse planes, as shown in Figure 24.

## Claims

1. Aircraft lift Module (4) for vertical take-off and landing aircraft, comprising:
- a structural compartment (40) in which at least one drive assembly is fixed (43) driving a rotor (42) and its corresponding blades, which, when rotating, define a plane of rotation;
- lids (41A,41B) movable between an open and a closed position of the structural compartment (40); and
- driving means for actuating said lids (41A,41B);
wherein the driving means are such that in the open position both lids (41A,41B) are positioned below the plane of rotation of the blades so as not to interfere with the rotation of the rotor;
and wherein the lids (41A,41B) have a curved arc-shaped cross-section such that, in closed position, their lower edges are flush with the upper edges of the structural compartment (40), the cross-section of which is formed by another curved arc;
the lift module (4) being **characterized in that**:
- the driving means are such that in the opening movement of the lids (41A,41B), these perform a combined movement of lateral displacement that helps them to overcome the level of the upper edge of the structural compartment (40) and another of downward displacement that places them below the plane of rotation of the blades;
- wherein in order to carry out the lateral displacement of the lids (41A,41B) it comprises transverse guides (41A-5 and 41B-5) fixed to the structural compartment (40) on which a plurality of motors (41A-3 and 41B-3) slide when pushed linearly by drive devices, also causing the lateral displacements of a plurality of active arms (41A-1 and 41B-1) and of sections of the lids (41A,41B); and
- wherein bearings or bushings (41A-4 and 41B-4) slide on the transverse guides (41A-5 and 41B-5) when they are pushed linearly by the drive devices, also causing the lateral displacements of a plurality of passive arms (41A-1' and 41B-1') and of the sections of the lids (41A,41B).

2. Aircraft lift module (4) according to claim 1, wherein the driving means of the lids (41A,41B) are such that, in their open position, both lids are located at least partially below the structural compartment (40).

3. Aircraft lift module (4) according to claim 1 or 2, wherein the driving means of the lids (41A,41B) comprise:
- at least one (41A-1) of the plurality of active arms, which is attached at its upper end to one of the lids (41A), and at its lower end has a shaft attached to it which is in conjunction with the shaft (41A-2) of one (41A-3) of the plurality of motors, which rotates the lid (41A) in a controlled manner; and
- at least another one (41B-1) of the plurality of active arms, which is attached at its upper end to the other lid (41B) and at its lower end has a shaft attached to it, which is connected to the shaft (41B-2) of another one (41B-3) of the plurality of motors, which rotates the lid (41B) in a controlled manner.

4. Aircraft lift module (4) according to claim 3, wherein the axes of rotation of the active arms (41A-1,41B-1), which are in solidarity with the shafts (41A-2,41B-2) of the respective motors (41A-3 and 41B-3) respectively, are fixed to the structural compartment (40) and are located on both sides and equidistant from a longitudinal axis X of the sustainer module and are located in the same transverse plane.

5. Aircraft lift module (4) according to claim 3 or 4, wherein the driving means of the lids (41A,41B) comprise:
- at least one (41A-1') of the plurality of passive arms, which is attached at its upper end to one of the lids (41A) and at its lower end has a freely rotating solidary shaft in a bearing or bushing (41A-4); and
- at least another one (41B-1) of the plurality of passive arms, which is attached at its upper end to the other lid (41B) and at its lower end has a freely rotating solidary shaft attached to a bearing or bushing (41B-4).

6. Aircraft lift module (4) for vertical take-off and landing aircraft, comprising:
- a structural compartment (40) in which at least one drive assembly is fixed (43) driving a rotor (42) and its corresponding blades, which, when rotating, define a plane of rotation;
- lids (41A,41B) movable between an open and a closed position of the structural compartment (40); and
- driving means for actuating said lids (41A,41B);
- wherein the driving means are such that in the open position both lids (41A, 41B) are positioned below the plane of rotation of the blades so as not to interfere with the rotation of the rotor; and
- wherein the lids (41A, 41B) have a curved arc-shaped cross-section such that, in closed position, their lower edges are flush with the upper edges of the structural compartment (40), the cross-section of which is formed by another curved arc;
the lift module (4) being **characterized in that**:
- the driving means are such that in the opening movement of the lids (41A,41B), these perform a combined upward turning movement that helps them to overcome the level of the upper edge of the structural compartment (40) and another downward movement that places them below the plane of rotation of the blades;
- wherein in order to carry out the upward rotation of the lids (41A,41B) these are articulated with the upper ends of active arms (41A-1 and 41B-1 ) respectively, by means of motors (41A-7 and 41B-7) fixed to said arms and located in different transversal planes and whose axes (41A-6 and 41B-6) are solidary with their corresponding lids (41A,41B); and
- wherein the lids (41A,41B) are articulated with the upper ends of passive arms (41-A1' and 41B-') respectively, by means of bearings or bushes (41A-8 and 41B-8) fixed to said arms and located in different transversal planes and whose axes (41A-6 and 41B-6) are solidary with their corresponding lids.

7. Vertical take-off and landing aircraft comprising at least one lift module (4) according to any one of claims 1 to 5 or 6.

## Patentansprüche

1. Flugzeug-Auftriebsmodul (4) für ein vertikal startendes und landendes Flugzeug, umfassend:
- ein bauliches Abteil (40), in dem mindestens ein Antriebsaggregat befestigt ist (43), das einen Rotor (42) und seine entsprechenden Blätter antreibt, die, wenn sie sich drehen, eine Rotationsebene definieren;
- Deckel (41A,41B), die zwischen einer geöffneten und einer geschlossenen Stellung des baulichen Abteils (40) bewegbar sind; und
- Antriebsmittel zum Betätigen der Deckel (41A,41B);
wobei die Antriebsmittel dergestalt sind, dass in der geöffneten Stellung beide Deckel (41A,41B) unterhalb der Rotationsebene der Blätter positioniert sind, um die Rotation des Rotors nicht zu behindern;
und wobei die Deckel (41A,41B) einen gekrümmten bogenförmigen Querschnitt derart aufweisen, dass in geschlossener Stellung ihre Unterkanten mit den Oberkanten des baulichen Abteils (40) bündig sind, dessen Querschnitt durch einen weiteren gekrümmten Bogen gebildet wird;
wobei das Auftriebsmodul (4) **dadurch gekennzeichnet ist, dass**:
- die Antriebsmittel dergestalt sind, dass bei der Öffnungsbewegung der Deckel (41A,41B) diese eine kombinierte Bewegung aus einer seitlichen Verschiebung, die ihnen hilft, die Höhe der Oberkante des baulichen Abteils (40) zu überwinden, und einer anderen Abwärtsverschiebung ausführen, die sie unter die Rotationsebene der Blätter platziert;
- wobei es zum Ausführen der seitlichen Verschiebung der Deckel (41A,41B) am baulichen Abteil (40) befestigte Querführungen (41A-5 und 41B-5) umfasst, auf denen eine Vielzahl von Motoren (41A-3 und 41B-3) gleitet, wenn sie linear von Antriebsvorrichtungen geschoben werden, wodurch auch die seitlichen Verschiebungen einer Vielzahl von aktiven Armen (41A-1 und 41B-1) und von Abschnitten der Deckel (41A,41B) bewirkt werden; und
- wobei Lager oder Buchsen (41A-4 und 41B-4) auf den Querführungen (41A-5 und 41B-5) gleiten, wenn sie linear von den Antriebsvorrichtungen geschoben werden, wodurch auch die seitlichen Verschiebungen einer Vielzahl von passiven Armen (41A-1' und 41B-1') und der Abschnitte der Deckel (41A,41B) bewirkt werden.

2. Flugzeug-Auftriebsmodul (4) nach Anspruch 1, wobei die Antriebsmittel der Deckel (41A,41B) dergestalt sind, dass sich beide Deckel in ihrer geöffneten Stellung zumindest teilweise unterhalb des baulichen Abteils (40) befinden.

3. Flugzeug-Auftriebsmodul (4) nach Anspruch 1 oder 2, wobei die Antriebsmittel der Deckel (41A,41B) umfassen:
- mindestens einen (41A-1) der Vielzahl von aktiven Armen, der an seinem oberen Ende an einem der Deckel (41A) befestigt ist und an seinem unteren Ende eine an ihm befestigte Welle aufweist, die in Verbindung mit der Welle (41A-2) von einem (41A-3) der Vielzahl von Motoren steht, der den Deckel (41A) in kontrollierter Weise dreht;
und
- mindestens einen anderen (41B-1) der Vielzahl von aktiven Armen, der an seinem oberen Ende an dem anderen Deckel (41B) befestigt ist und an seinem unteren Ende eine an ihm befestigte Welle aufweist, die mit der Welle (41B-2) von einem anderen (41B-3) der Vielzahl von Motoren verbunden ist, der den Deckel (41B) in kontrollierter Weise dreht.

4. Flugzeug-Auftriebsmodul (4) nach Anspruch 3, wobei die Drehachsen der aktiven Arme (41A-1,41B-1), die jeweils mit den Wellen (41A-2,41B-2) der entsprechenden Motoren (41A-3 und 41B-3) fest verbunden sind, am baulichen Abteil (40) befestigt sind und sich auf beiden Seiten und im gleichen Abstand von einer Längsachse X des Stützmoduls befinden und in derselben Querebene liegen.

5. Flugzeug-Auftriebsmodul (4) nach Anspruch 3 oder 4, wobei die Antriebsmittel der Deckel (41A,41B) umfassen:
- mindestens einen (41A-1') der Vielzahl von passiven Armen, der an seinem oberen Ende an einem der Deckel (41A) befestigt ist und an seinem unteren Ende eine frei drehende fest verbundene Welle in einem Lager oder einer Buchse (41A-4) aufweist; und
- mindestens einen anderen (41B-1') der Vielzahl von passiven Armen, der an seinem oberen Ende an dem anderen Deckel (41B) befestigt ist und an seinem unteren Ende eine frei drehende fest verbundene Welle aufweist, die an einem Lager oder einer Buchse (41B-4) befestigt ist.

6. Flugzeug-Auftriebsmodul (4) für ein vertikal startendes und landendes Flugzeug, umfassend:
- ein bauliches Abteil (40), in dem mindestens ein Antriebsaggregat befestigt ist (43), das einen Rotor (42) und seine entsprechenden Blätter antreibt, die, wenn sie sich drehen, eine Rotationsebene definieren;
- Deckel (41A,41B), die zwischen einer geöffneten und einer geschlossenen Stellung des baulichen Abteils (40) bewegbar sind; und
- Antriebsmittel zum Betätigen der Deckel (41A,41B);
- wobei die Antriebsmittel dergestalt sind, dass in der geöffneten Stellung beide Deckel (41A, 41B) unterhalb der Rotationsebene der Blätter positioniert sind, um die Rotation des Rotors nicht zu behindern; und
- wobei die Deckel (41A,41 B) einen gekrümmten bogenförmigen Querschnitt derart aufweisen, dass in geschlossener Stellung ihre Unterkanten mit den Oberkanten des baulichen Abteils (40) bündig sind, dessen Querschnitt durch einen weiteren gekrümmten Bogen gebildet wird;
wobei das Auftriebsmodul (4) **dadurch gekennzeichnet ist, dass**:
- die Antriebsmittel dergestalt sind, dass bei der Öffnungsbewegung der Deckel (41A,41B) diese eine kombinierte Aufwärtsdrehbewegung, die ihnen hilft, die Höhe der Oberkante des baulichen Abteils (40) zu überwinden, und eine andere Abwärtsbewegung ausführen, die sie unter die Rotationsebene der Blätter platziert;
- wobei zum Ausführen der Aufwärtsdrehung der Deckel (41A,41B) diese jeweils an die oberen Enden von aktiven Armen (41A-1 und 41B-1) mittels Motoren (41A-7 und 41B-7) angelenkt sind, die an den Armen befestigt sind und sich in verschiedenen Querebenen befinden und deren Achsen (41A-6 und 41B-6) mit ihren entsprechenden Deckeln (41A,41B) fest verbunden sind; und
- wobei die Deckel (41A,41B) jeweils an die oberen Enden von passiven Armen (41-A1' und 41B-1') mittels Lagern oder Buchsen (41A-8 und 41B-8) angelenkt sind, die an den Armen befestigt sind und sich in verschiedenen Querebenen befinden und deren Achsen (41A-6 und 41B-6) mit ihren entsprechenden Deckeln fest verbunden sind.

7. Vertikal startendes und landendes Flugzeug, umfassend mindestens ein Auftriebsmodul (4) nach einem der Ansprüche 1 bis 5 oder 6.

## Revendications

1. Module de sustentation (4) d'aéronef à décollage et atterrissage verticaux, comprenant :
- un compartiment structurel (40) dans lequel est fixé (43) au moins un ensemble d'entraînement entraînant un rotor (42) et ses pales correspondantes, qui, lorsqu'elles tournent, définissent un plan de rotation ;
- des couvercles (41A, 41B) pouvant se déplacer entre une position ouverte et une position fermée du compartiment structurel (40) ; et
- des moyens d'entraînement pour actionner lesdits couvercles (41A, 41B) ;
dans lequel les moyens d'entraînement sont tels que, en position ouverte, les deux couvercles (41A, 41B) sont positionnés en dessous du plan de rotation des pales afin de ne pas gêner la rotation du rotor ;
et dans lequel les couvercles (41A, 41B) présentent une section transversale en forme d'arc courbe de telle sorte que, en position fermée, leurs bords inférieurs affleurent les bords supérieurs du compartiment structurel (40), dont la section transversale est formée par un autre arc courbe ;
le module de sustentation (4) étant **caractérisé en ce que** :
- les moyens d'entraînement sont tels que, lors du mouvement d'ouverture des couvercles (41A, 41B), ceux-ci effectuent un mouvement combiné d'un déplacement latéral qui les aide à dépasser le niveau du bord supérieur du compartiment structurel (40) et d'un déplacement vers le bas qui les place en dessous du plan de rotation des pales ;
- dans lequel, afin d'effectuer le déplacement latéral des couvercles (41A, 41B), il comprend des guides transversaux (41A-5 et 41B-5) fixés au compartiment structurel (40) sur lesquels une pluralité de moteurs (41A-3 et 41B-3) coulissent lorsqu'ils sont poussés linéairement par des dispositifs d'entraînement, provoquant également les déplacements latéraux d'une pluralité de bras actifs (41A-1 et 41B-1) et de sections des couvercles (41A, 41B) ; et
- dans lequel des paliers ou bagues (41A-4 et 41B-4) coulissent sur les guides transversaux (41A-5 et 41B-5) lorsqu'ils sont poussés linéairement par les dispositifs d'entraînement, provoquant également les déplacements latéraux d'une pluralité de bras passifs (41A-1' et 41B-1') et des sections des couvercles (41A, 41B).

2. Module de sustentation (4) d'aéronef selon la revendication 1, dans lequel les moyens d'entraînement des couvercles (41A, 41B) sont tels que, en position ouverte, les couvercles se trouvent au moins partiellement en dessous du compartiment structurel (40).

3. Module de sustentation (4) d'aéronef selon la revendication 1 ou 2, dans lequel les moyens d'entraînement des couvercles (41A, 41B) comprennent :
- au moins un (41A-1) parmi la pluralité de bras actifs, qui est fixé à son extrémité supérieure à l'un des couvercles (41A), et à son extrémité inférieure est muni d'un arbre qui est en liaison avec l'arbre (41A-2) de l'un (41A-3) de la pluralité de moteurs, qui fait tourner le couvercle (41A) de manière contrôlée ; et
- au moins un autre (41B-1) parmi la pluralité de bras actifs, qui est fixé à son extrémité supérieure à l'autre couvercle (41B) et à son extrémité inférieure est muni d'un arbre, qui est à connecté à l'arbre d'un autre (41B-3) de la pluralité de moteurs, qui fait tourner le couvercle (41B) de manière contrôlée.

4. Module de sustentation (4) d'aéronef selon la revendication 3, dans lequel les axes de rotation des bras actifs (41A-1, 41B-1), qui sont solidaires des arbres (41A-2, 41B-2) des moteurs respectifs (41A-3 et 41B-3), respectivement, sont fixés au compartiment structurel (40) et sont situés de part et d'autre et à égale distance d'un axe longitudinal X du module de sustentation et se trouvent dans le même plan transversal.

5. Module de sustentation (4) d'aéronef selon la revendication 3 ou 4, dans lequel les moyens d'entraînement des couvercles (41A, 41B) comprennent :
- au moins un (41A-1') de la pluralité de bras passifs, qui est fixé à son extrémité supérieure à l'un des couvercles (41A) et qui comporte à son extrémité inférieure un arbre solidaire tournant librement dans un palier ou une bague (41A-4) ; et
- au moins un autre (41B-1) de la pluralité de bras passifs, qui est fixé à son extrémité supérieure à l'autre couvercle (41B) et qui comporte, à son extrémité inférieure, un arbre solidaire tournant librement fixé à un palier ou une bague (41B-4).

6. Module de sustentation (4) d'aéronef à décollage et atterrissage verticaux, comprenant :
- un compartiment structurel (40) dans lequel est fixé (43) au moins un ensemble d'entraînement, entraînant un rotor (42) et ses pales correspondantes, qui, lorsqu'ils tournent, définissent un plan de rotation ;
- des couvercles (41A, 41B) mobiles entre une position ouverte et une position fermée du compartiment structurel (40) ; et
- des moyens d'entraînement pour actionner lesdits couvercles (41A, 41B) ;
- dans lequel les moyens d'entraînement sont tels que, dans la position ouverte, les deux couvercles (41A, 41B) sont positionnés en dessous du plan de rotation des pales afin de ne pas gêner la rotation du rotor ; et
- dans lequel les couvercles (41A, 41B) présentent une section transversale en forme d'arc courbe de telle sorte que, en position fermée, leurs bords inférieurs affleurent les bords supérieurs du compartiment structurel (40), dont la section transversale est formée par un autre arc courbe ;
le module de sustentation (4) étant **caractérisé en ce que** :
- les moyens d'entraînement sont tels que, lors du mouvement d'ouverture des couvercles (41A, 41B), ceux-ci effectuent un mouvement combiné de rotation vers le haut qui les aide à franchir le niveau du bord supérieur du compartiment structurel (40) et un autre mouvement vers le bas qui les place en dessous du plan de rotation des pales ;
- dans lequel, afin d'effectuer la rotation vers le haut des couvercles (41A, 41B), ceux-ci sont articulés avec les extrémités supérieures des bras actifs (41A-1 et 41B-1) respectivement, au moyen
de moteurs (41A-7 et 41B-7) fixés auxdits bras et situés dans des plans transversaux différents, et dont les axes (41A-6 et 41B-6) sont solidaires de leurs couvercles respectifs (41A, 41B) ; et
- dans lequel les couvercles (41A, 41B) sont articulés avec les extrémités supérieures de bras passifs (41-A1' et 41B-1') respectivement, au moyen de paliers ou de bagues (41A-8 et 41B-8) fixés auxdits bras et situés dans des plans transversaux différents et dont les axes (41A-6 et 41B-6) sont solidaires de leurs couvercles respectifs.

7. Aéronef à décollage et atterrissage verticaux comprenant au moins un module de sustentation (4) selon l'une quelconque des revendications 1 à 5 ou 6.
